# EUROPÄISCHE PATENTSCHRIFT

(11) **EP 2 673 602 B1**
(45) Veröffentlichungstag und Bekanntmachung des Hinweises auf die Patenterteilung: **24.12.2014**
(21) Anmeldenummer: 12701830.7
(22) Anmeldetag: 21.01.2012
(51) Int. Cl.: G01G 23/01

(54) **WÄGEZELLE SOWIE VERFAHREN ZUM JUSTIEREN EINER WÄGEZELLE**
LOAD CELL AND METHOD FOR ADJUSTING A LOAD CELL
CELLULE DE PESAGE AINSI QUE PROCÉDÉ D'AJUSTAGE D'UNE CELLULE DE PESAGE

(30) Priorität: 08.02.2011 DE 102011000554
(43) Veröffentlichungstag der Anmeldung: 18.12.2013
(73) Patentinhaber: Sartorius Lab Instruments GmbH & Co. KG, 37075 Göttingen (DE)
(72) Erfinder: LAUBSTEIN, Michael, 37077 Göttingen (DE)
(86) Internationale Anmeldenummer: PCT/EP2012/000271
(87) Internationale Veröffentlichungsnummer: WO 2012/107166

(56) Entgegenhaltungen:
- EP-A1- 0 955 530
- DE-U1- 8 324 676
- DE-U1- 8 715 016
- JP-A- 9 043 043
- JP-A- 61 082 118

## Beschreibung

Die Erfindung betrifft eine Wägezelle mit einem Wägesystem mit einem Krafteinleitungspunkt, einem Lastkragarm zur Aufnahme der zu wiegenden Lasten an einer vom Krafteinleitungspunkt entfernten Position und einer Justiervorrichtung, wobei sich der Lastkragarm in Draufsicht auf die Wägezelle vom Krafteinleitungspunkt in einer Längsrichtung erstreckt.

Die Wägezelle ist sozusagen das Herz einer elektromechanischen Waage. Üblicherweise ist in der Wägezelle ein Parallelogramm untergebracht, das die Last auf einen Wägebalken, auch Übersetzungshebel genannt, übertragen muss. Die am Wägebalken wirkende Kraft wird nach hinlänglich bekannten Verfahren der elektromagnetischen Kraftkompensation gemessen. In die Wägezelle wird die Kraft an einem vorbestimmten Krafteinleitungspunkt eingeleitet. Bei Verwendung eines Lastkragarms liegt die zu wiegende Last nicht extern über dem Krafteinleitungspunkt der Wägezelle auf, sondern entfernt von ihm. Es ist nicht möglich, die Gewichtskraft der Last fehlerfrei auf den Wägebalken zu übertragen, denn durch die Belastung entfernt vom Krafteinleitungspunkt, im Folgenden auch Außermittigkeit genannt, kommt es zu sogenannten Ecklastfehlern. Bei der Produktion einer Waage wird der Ecklastfehler, welcher linear vom Moment abhängt, das durch die Last und die Außermittigkeit erzeugt wird, durch Justierungen auf ein Minimum reduziert, wobei aber kleine Fehler bleiben. Durch Temperatureinflüsse und durch Belastungen, insbesondere beim Transport, kann sich der Ecklastfehler ändern.

Neben dem Ecklastfehler, der durch den Lastkragarm bedingt ist, gibt es noch einen zweiten Ecklastfehler, der dadurch auftritt, dass das Gewicht nicht exakt im Mittelpunkt oder der Mittelachse der Schale aufgelegt wird, sondern außermittig zur Mittelachse. Diesen zweiten Ecklastfehler betrifft die vorliegende Erfindung jedoch nicht.

Die Ecklastfehler werden auch bei einer Belastung der Waage mit internen Justiergewichten wirksam, sofern sie ein Moment auf die Wägezelle ausüben. Bei den bisher bekannten Waagen ist man daher bestrebt, die internen Justiergewichte in derselben senkrechten Achse wie die zu wiegende Last anzuordnen (das heißt in der Achse der durch die zu wiegende Last definierten Kraftresultierenden), da dadurch Justierfehler bei sich ändernder Ecklast minimiert werden. Dadurch ergibt sich, dass in der Regel ein Bauraum für die internen Justiergewichte in unmittelbarer Nähe der zu wiegenden Last benötigt wird. Das jedoch schränkt die konstruktiven Möglichkeiten in der Umgebung des Lastangriffspunkts (zum Beispiel Waagschale an einem Last-Kragarm) unvorteilhaft ein.

Aus der DE 203 04 062 U1 ist eine Wägezelle in Form eines sogenannten oberschaligen Systems bekannt. Der Krafteinleitungspunkt in der Wägezelle liegt in der Achse der Schale, und die Wägezelle selbst ist unmittelbar unterhalb der Schale positioniert. Auch das Justiergewicht sitzt unterhalb der Schale. Um das Justiergewicht herum ist eine Temperaturausgleichsmasse vorhanden, die ungleiche Temperaturverhältnisse unterhalb der Schale verhindern soll.

Aus der DE 83 24 676 U1 ist eine oberschalige Analysenwaage bekannt, die mit einem L-förmigen Lagerarm versehen ist, auf dem die Waagschale sitzt. Justiergewichte sind unmittelbar unterhalb der Waagschale, nahe an der Mittelachse der Waagschale angeordnet, um auf den Ausleger des Lagerarms aufgelegt zu werden.

Weitere relevante Dokumente des Standes der Technik sind JP 09-43043 und JP61-82118.

Aufgabe der Erfindung ist es, eine Wägezelle zu schaffen, bei der die zu wiegenden Wägegüter sehr bequem auf den Lastkragarm aufzubringen sind und die eine leistungsfähige Justiervorrichtung zur Kompensation der Ecklastfehler aufweist.

Dies wird durch eine Wägezelle der eingangs genannten Art erreicht, die einen Justiergewichtskragarm hat, welcher sich in der Längsrichtung auf der zum Lastkragarm entgegengesetzten Seite bezogen auf den Krafteinleitungspunkt erstreckt und der wenigstens zwei an ihm vorgegebene Justiergewichtsangriffspunkte aufweist. Darüber hinaus ist wenigstens eine Aktivierungseinheit vorgesehen, die auf den Justiergewichtsangriffspunkten wenigstens ein Justiergewicht auflegt. In Draufsicht, d.h. vertikaler Ansicht auf die Wägezelle erstrecken sich der Lastkragarm und der Justiergewichtskragarm entgegengesetzt in der Längsrichtung, die durch den Krafteinleitungspunkt geht. Bei bekannten Wägezellen sind üblicherweise die Justiergewichtskragarme in Seitenansicht unter den Lastkragarmen angeordnet bzw. Last- und Justiergewichtskragarme bilden eine Einheit. Bei der erfindungsgemäßen Wägezelle jedoch liegt der Justiergewichtskragarm in Verlängerung des Lastkragarms, sodass der Lastkragarm maximal nach unten auskragen kann. Damit ist es möglich, bei Tischwaagen den Lastkragarm möglichst nahe an die Tischoberfläche zu bringen und keinen Bauraum unterhalb des Lastkragarms und somit unterhalb der Tischoberfläche für die Justiergewichte zu beanspruchen. Dies macht es für den Benutzer bei einer kompakten konstruktiven Gestaltung des Gerätes ergonomisch wesentlich angenehmer, das Wägegut auf den Lastkragarm aufzulegen, und verbessert sowohl die Arbeitsgeschwindigkeit als auch die Arbeitsgenauigkeit beim Dosieren von Stoffen. Die Erfindung sieht vor, den Justiergewichtskragarm auf der entgegengesetzten Seite des Krafteinleitungspunkts bezogen auf die Schale anzuordnen. Durch diese Anordnung zumindest eines Justiergewichts auf der entgegengesetzten Seite kann der Ecklastfehler, der auf der Schalenseite durch den Lastkragarm hervorgerufen wird, kompensiert werden. Zumindest ein Justiergewicht wird entfernt vom Krafteinleitungspunkt aufgelegt. Durch die Auflage des zweiten Justiergewichts, zum Beispiel durch eine momentenfreie Auflage, kann dann der Ecklastfehler auf der Schalenseite ermittelt werden, wodurch er sich rechnerisch eliminieren lässt. Dies ist im Übrigen auch möglich, wenn beide Justiergewichte außermittig aufgesetzt werden, dann erfolgt die Bestimmung des Ecklastfehlers durch die Differenz der verschiedenen Kompensationen durch die beiden unterschiedlich wirkenden Justiergewichte. Die Aktivierungseinheit, die die Justiergewichte oder das Justiergewicht ablegt, arbeitet motorisch und wird üblicherweise auch als Gewichtsschaltung bezeichnet.

Durch die mindestens zwei Justiergewichtsangriffspunkte auf dem Justiergewichtskragarm ist es möglich, die Ecklast jederzeit automatisch zu bestimmen. Diese Bestimmung der Ecklast kann sowohl bei der werkseitigen Kalibrierung der internen Justiergewichte als auch bei einer internen Justierung der Waage durch den Anwender geschehen. Damit ist es möglich, eine eventuelle Änderung des Ecklastfehlers bei der Berechnung des Justierfaktors zu berücksichtigen.

Der Lastkragarm ragt üblicherweise in einen an die Wägezelle angrenzenden Wägeraum. Der Justiergewichtskragarm ist außerhalb dieses Wägeraums seitlich von ihm entfernt angeordnet, genauer gesagt, er erstreckt sich, bezogen auf den Krafteinleitungspunkt, in Längsrichtung in der entgegengesetzten Richtung des Lastkragarms von diesem weg.

Der Justiergewichtskragarm sollte sich vorzugsweise im Inneren des Gehäuses der Wägezelle und damit geschützt vor äußeren Einflüssen befinden.

Es werden zwei oder mindestens zwei Wägeschritte durchgeführt, nämlich an den mindestens zwei vorgegebenen Justiergewichtsangriffspunkten. Dabei ist es möglich, dasselbe Justiergewicht auf beiden Punkten aufzulegen oder an jedem Justiergewichtsangriffspunkt ein eigenes Justiergewicht vorzusehen. Die Aktivierungseinheit legt die beiden Justiergewichte nacheinander auf den Justiergewichtskragarm auf oder positioniert dasselbe Justiergewicht so, dass es einmal am ersten und einmal am zweiten Angriffspunkt aufgelegt wird.

Gemäß der bevorzugten Ausführungsform ist vorgesehen, dass einer der zwei Justiergewichtsangriffspunkte im Wesentlichen momentenfrei bezüglich des Wägesystems ist. Das bedeutet, dass sich dieser Justiergewichtsangriffspunkt mit dem Krafteinleitungspunkt in einer senkrechten Achse befindet. Der andere Justiergewichtsangriffspunkt ist vom Krafteinleitungspunkt entfernt, um bewusst eine Ecklast zu erzeugen. Eine andere Ausführungsform der Erfindung sieht vor, dass beide Justiergewichtsangriffspunkte vom Krafteinleitungspunkt unterschiedlich entfernt sind, sodass an beiden Kraftangriffspunkten eine Ecklast erzeugt wird.

Die beiden Justiergewichte, sofern zwei Justiergewichte vorgesehen sind, besitzen im Wesentlichen die gleiche Masse, wobei "im Wesentlichen" bezogen auf die Messgenauigkeit der Wägezelle die gleiche Masse bedeutet.

Das Wägesystem ist die mechanisch-elektrische Einheit in der Wägezelle, in die die Kraft beim Wiegen oder Justieren eingeleitet wird und in der die Auslenkung des mechanischen Teils aufgrund der aufgebrachten Last elektrisch erfasst wird. Der Lastkragarm und der Justiergewichtskragarm können in vorteilhafter Weise an derselben Stelle an das Wägesystem angekoppelt sein. Der Lastkragarm und der Justiergewichtskragarm können dabei ineinander übergehen, das heißt entweder einstückig oder unter Kontaktierung der beiden Arme.

Vorzugsweise sind sowohl Justiergewichtskragarm als auch Lastkragarm in Draufsicht langgestreckte und lineare Körper, sodass der Justiergewichtskragarm eine lineare, über den Krafteinleitungspunkt hinausgehende Verlängerung des Lastkragarms ist.

Innerhalb des Gehäuses der Wägezelle sollten der Lastkragarm und der Justiergewichtskragarm auf gleicher Höhe und/oder vertikal versetzt in Richtung der Längsrichtung verlaufen, aber gemeinsam am Krafteinleitungspunkt in das Wägesystem ankoppeln.

Eine Ausführungsform der Erfindung sieht vor, dass ein weiterer Justiergewichtskragarm zum Angriff eines Justiergewichts vorgesehen ist, welcher sich quer zu der Verbindungsgeraden von dem Lastangriffspunkt am Lastkragarm und dem Krafteinleitungspunkt erstreckt, das heißt quer zur Längsrichtung verläuft. Der zweite Justiergewichtskragarm wird in diesem Fall bei Belastung ebenfalls eine Ecklast erzeugen, sodass zusammen mit der Ecklast aus dem ersten Kragarm der Ecklastfehler der Wägezelle auch in orthogonaler Richtung bestimmt werden kann. Somit wird durch den sich in Längsrichtung erstreckenden Justiergewichtskragarm der Ecklastfehler vorne/hinten kompensiert, wogegen der zweite, quer zur Längsrichtung verlaufende Justiergewichtskragarm zur Bestimmung und gegebenenfalls zur Kompensation des Ecklastfehlers rechts/links vorgesehen ist.

Unzulässige Änderungen der Ecklastfehler können beispielsweise zum Erkennen von Schädigungen der Wägezelle genutzt werden.

Die Erfindung betrifft darüber hinaus auch ein Verfahren zum Justieren einer vorgenannten Wägezelle. Das Verfahren ist durch folgende Schritte gekennzeichnet:
Auflegen wenigstens eines Justiergewichts auf zwei am Justiergewichtskragarm vorgesehene Justiergewichtsangriffspunkte,
Ermitteln der Gewichtswerte an beiden Justiergewichtsangriffspunkten,
Berechnung der Änderung der Ecklast zwischen werkseitiger Justierung und Momentanzustand, und

Bestimmung des Kalibrierfaktors der Waage unter Berücksichtigung des Ecklastfehlers bzw. seiner Änderung.

Die entsprechenden Berechnungsverfahren hierzu sind dem Fachmann hinlänglich bekannt und müssen deshalb nicht weiter erläutert werden.

Vorteilhaft ist es, wenn werkseitig ein Grenzwert für die Ecklast der Wägezelle oder, allgemeiner, in der Steuerung der Wägezelle abgelegt wird. Ab Erreichen eines Grenzwerts des ermittelten Ecklastfehlers wird dann beim Gebrauch der Wägezelle eine Fehlermeldung angezeigt, um auf den nicht ordnungsgemäßen Zustand des Gerätes hinzuweisen. Verfügt die Waage über geeignete Rechenmittel zur digitalen Kompensation des Ecklastfehlers, ist es möglich, diesen automatisch zu kompensieren. Ist eine solche Kompensation nicht möglich, müssen Maßnahmen zum mechanischen Korrigieren des Fehlers, eventuell durch Servicepersonal eingeleitet werden.

Gemäß der bevorzugten Ausführungsform wird aus der Abweichung der Differenz der beiden Justiergewichte zum Zustand der werkseitigen Kalibrierung die Änderung der Ecklast berechnet.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine schematische Seitenansicht einer erfindungsgemäßen Wägezelle mit zwei Justiergewichten,
- Figur 2 eine schematische Seitenansicht einer weiteren Ausführungsform der erfindungsgemäßen Wägezelle mit Wägeraum und nur einem Justiergewicht, und
- Figur 3 eine Draufsicht auf die Wägezelle nach Figur 2.

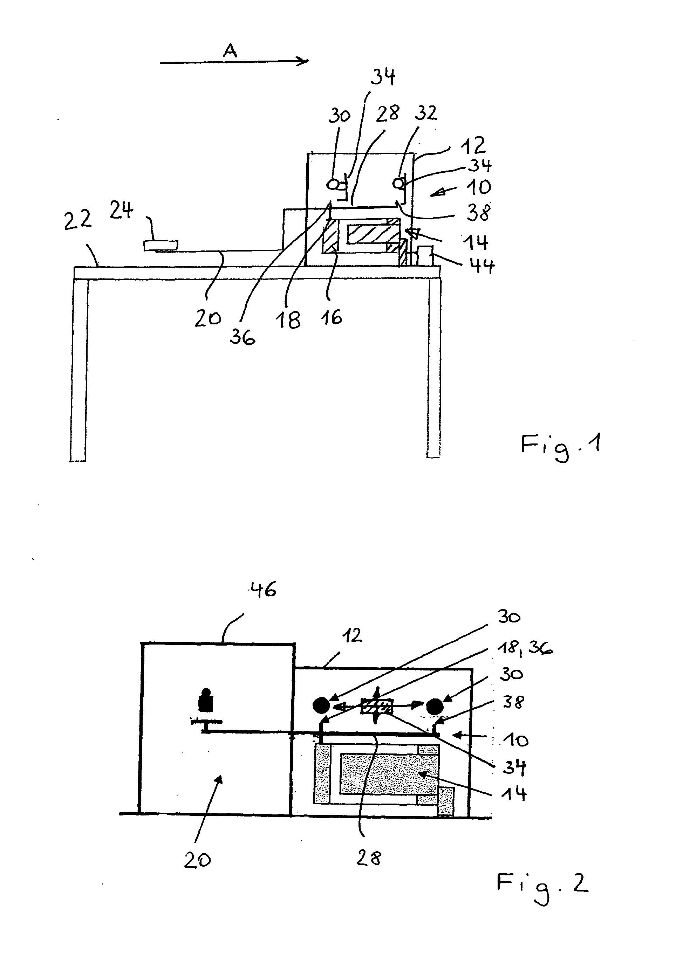

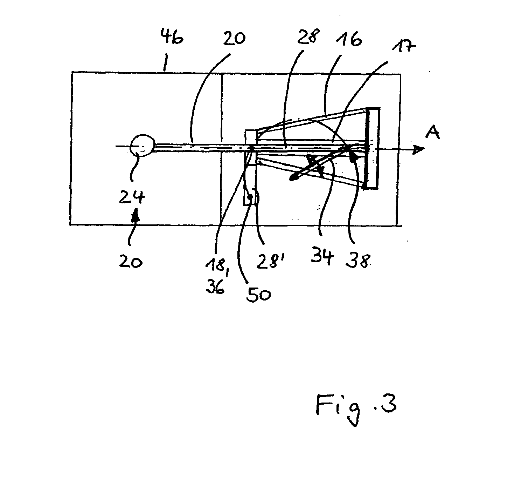

In Figur 1 ist eine Wägezelle 10 mit einem Gehäuse 12 dargestellt. Im Inneren des Gehäuses 12 befindet sich das sogenannte Wägesystem 14, welches vorzugsweise ein Parallelogramm 16 aufweist, das die aufgebrachte Last auf einen Wägebalken 17 (siehe Figur 3) überträgt.

An einem Ende des Parallelogramms 16 ist ein Krafteinleitungspunkt 18 vorgesehen, an dem ein aus dem Gehäuse herausragender Lastkragarm 20 an das Wägesystem angekoppelt ist.

Der Lastkragarm 20 verläuft vorzugsweise innerhalb des Gehäuses 12 horizontal und ist dann außerhalb des Gehäuses 12 nach unten abgewinkelt, sodass sich dieser abgewinkelte Abschnitt sehr nahe an einer Tischoberfläche 22 entlang erstreckt.

Der Abstand zwischen dem abgewinkelten Abschnitt des Lastkragarms 20 und der Tischoberfläche 22 ist minimal.

Am Ende des Lastkragarms 20 ist eine Schale 24 befestigt, welche die zu wiegenden Wägegüter aufnehmen kann.

Der Lastkragarm 20 ist über zum Beispiel eine nicht dargestellte Kupplung lösbar befestigt.

In Draufsicht betrachtet (siehe Figur 3) ist der Lastkragarm 20 ein langgestrecktes, lineares Gebilde, welches sich in einer Längsrichtung A, auch Längsachse genannt, zum Krafteinleitungspunkt 18 erstreckt.

Vom Krafteinleitungspunkt 18 aus erstreckt sich ein Justiergewichtskragarm 28 ebenfalls in der Längsrichtung A, jedoch auf der zum Lastkragarm 20 entgegengesetzten Seite, bezogen auf den Krafteinleitungspunkt 18.

In der gezeigten Ausführungsform sind der Lastkragarm 20 und der Justiergewichtskragarm 28 vorzugsweise an derselben Stelle an das Wägesystem 14 angekoppelt und gehen im Krafteinleitungspunkt 18 ineinander über.

Der Justiergewichtskragarm 28 bildet im dargestellten Ausführungsbeispiel, das nicht einschränkend zu verstehen ist, sozusagen eine lineare Verlängerung des Lastkraftarms 20.

Durch den Justiergewichtskragarm 28 soll der Ecklastfehler vorne/hinten (Ecklastfehler in Längsrichtung A) ermittelt werden, um ihn zu kompensieren oder zumindest weitgehend zu kompensieren.

Wie in Figur 1 zu erkennen ist, vorlaufen Lastkragarm 20 und Justiergewichtskragarm 28 innerhalb des Gehäuses 12 auf gleicher Höhe und horizontal.

Der Justiergewichtskragarm 28 ist Teil einer Justiervorrichtung, welche neben dem Justiergewichtskragarm 28 zwei oder mehrere Justiergewichte 30, 32 aufweist, mittels der die Wägezelle 10 am Aufstellort justiert werden kann.

Die beiden Justiergewichte 30, 32 können unterschiedlich weit vom Krafteinleitungspunkt 18 angeordnet sein, bei der gezeigten Ausführungsform ist das Justiergewicht 30 exakt oberhalb des Krafteinleitungspunkts 18 angeordnet.

Eines oder beide Gewichte können auch jeweils doppelt ausgeführt sein, um eine sogenannte Linearisierung der Waage zu ermöglichen.

Im gezeigten Ausführungsbeispiel ist das Justiergewicht 32 an einem zum Krafteinleitungspunkt 18 entgegengesetzten Ende des Justiergewichtskragarms 28 vorgesehen.

Zur Justiervorrichtung gehören auch Aktivierungseinheiten 34, die jeweils einem Justiergewicht 30, 32 zugeordnet sind und ein Auflegen des jeweiligen Justiergewichts 30, 32 auf den Justiergewichtskragarm 28 ermöglichen.

Mit den Aktivierungseinheiten 34 werden die Justiergewichte 30, 32 nacheinander auf die Justiergewichtsangriffspunkte 36 bzw. 38 auf dem Justiergewichtskragarm 28 abgelegt.

Die Justiergewichte 30, 32 können ein unterschiedliches Gewicht haben oder auch gleich sein.

Das Verfahren zum Justieren der Wägezelle 10, mit dem diese arbeitet, sieht Folgendes vor: Werkseitig wird die Wägezelle 10 justiert, d. h. der Kalibrierfaktor wird bestimmt. Dies geschieht mit einem oder mehreren Gewichten, die auf die Schale 24 gelegt werden. Anschließend werden die Gewichtswerte der beiden Justiergewichte 30, 32 an ihren zugeordneten Justiergewichtsangriffspunkten 36, 38 mittels der Wägezelle 10 sowie die Gewichtsdifferenz der beiden Gewichte 30, 32 bestimmt.

So kann bei der späteren Justage der Waage aus der ermittelten Änderung der Gewichtsdifferenz dieser beiden werkseitig bestimmten Justiergewichte auf eine Änderung der Ecklast geschlossen werden, die dann bei der Bestimmung des Kalibrierfaktors rechnerisch berücksichtigt wird.

In der Steuerung 44 ist ein Grenzwert für die dann ermittelte Differenz zum werkseitigen Zustand abgelegt. Sollte bei einer späteren Justage der Wägezelle 10 vor Ort dieser Grenzwert überschritten werden, so deutet dies auf einen Defekt der Wägezelle 10 hin, und es wird eine Fehlermeldung in einem Display angezeigt.

Es ist nicht zwingend erforderlich, dass zwei Justiergewichte 30, 32 vorgesehen sind. Alternativ hierzu kann auch ein Justiergewicht 30 verwendet werden, das nacheinander an den beiden Justiergewichtsangriffspunkten 36, 38 abgelegt wird. Dies ist in Figur 2 dargestellt.

Die Aktivierungseinheit 34 ist in diesem Fall auch nicht nur mit vertikal verstellbaren Motoren oder Hebeln versehen, sondern auch mit einer horizontalen Verstelleinrichtung, die das Justiergewicht 30 zwischen den Justiergewichtsangriffspunkten 36, 38 bewegt.

Bei der Ausführungsform nach Figur 2 ist auch ein Wägeraum 46 dargestellt, in den der Lastkragarm 20 hineinragt. Der Wägeraum 46 wird von einem Windschutz definiert. Ein solcher Wägeraum 46 kann auch bei der Ausführungsform nach Figur 1 entsprechend vorgesehen sein, wobei er sich hier ebenfalls an das Gehäuse 12 anschließt.

Gezeigt ist bei der Ausführungsform nach Figur 2, dass der Lastkragarm 20 nicht nach unten abgewinkelt ist, was jedoch natürlich auch hier vorteilhaft und möglich wäre. Dies ist deshalb möglich, weil sich der Justiergewichtskragarm 28 nicht im Wägeraum 46 oder unter ihm, sondern in der durch den Lastkragarm 20 definierten Längsrichtung auf der zum Lastkragarm 20 entgegengesetzten Seite bezogen auf den Krafteinleitungspunkt 18 erstreckt, und sozusagen eine insbesondere lineare Verlängerung des Lastkragarms 20 bildet.

Es ist bei beiden Ausführungsformen möglich, einen weiteren Justiergewichtskragarm 28' vorzusehen, wie dies in Figur 3 dargestellt ist. Der Justiergewichtskragarm 28' erstreckt sich quer zur Längsrichtung A vorzugsweise im rechten Winkel vom Justiergewichtskragarm 28 weg, insbesondere ausgehend vom Krafteinleitungspunkt 18, wo er an das Wägesystem 14 angekoppelt ist. Der Justiergewichtskragarm 28' geht sozusagen in die beiden anderen Kragarme 20, 28 über oder ist an diesen befestigt. Über den Justiergewichtskragarm 28' wird der Ecklastfehler links/rechts ermittelt und gegebenenfalls kompensiert.

Um den Aufwand für die Aktivierungseinheit 34 zu reduzieren und vor allem um nur eine Aktivierungseinheit 34 vorzusehen, kann der Justiergewichtsangriffspunkt 50 am Justiergewichtskragarm 28' auf einer Kreisbahn angeordnet sein (siehe unterbrochene Linie in Figur 2), die auch durch die Justiergewichtsangriffspunkte 36, 38 hindurch verläuft. Somit lässt sich die Aktivierungseinheit 34 zur Horizontalbewegung des Justiergewichts 30 längs einer Bahn verschwenken.

### Bezugszeichenliste

- 10: Wägezelle
- 12: Gehäuse
- 14: Wägesystem
- 16: Parallelogramm
- 17: Wägebalken
- 18: Krafteinleitungspunkt
- 20: Lastkragarm
- 22: Tischoberfläche
- 24: Schale
- 28: Justiergewichtskragarm
- 28': Justiergewichtskragarm
- 30: Justiergewicht
- 32: Justiergewicht
- 34: Aktivierungseinheit
- 36: Justiergewichtsangriffspunkt
- 38: Justiergewichtsangriffspunkt
- 44: Steuerung
- 46: Wägeraum
- 50: Justiergewichtsangriffspunkt
- A: Längsrichtung

## Patentansprüche

1. Wägezelle mit einem Wägesystem (14) mit einem Krafteinleitungspunkt (18), einem Lastkragarm (20) zur Aufnahme der zu wiegenden Lasten an einer vom Krafteinleitungspunkt (18) entfernten Position und einer Justiervorrichtung, wobei sich der Lastkragarm (20) in Draufsicht auf die Wägezelle (10) vom Krafteinleitungspunkt (18) in einer Längsrichtung (A) erstreckt, **gekennzeichnet durch** einen Justiergewichtskragarm (28), der sich in der Längsrichtung (A) auf der zum Lastkragarm (20) entgegengesetzten Seite bezogen auf den Krafteinleitungspunkt (18) erstreckt und der wenigstens zwei an ihm vorgegebene Justiergewichtsangriffspunkte (36, 38) aufweist, und wenigstens eine Aktivierungseinheit (34), die auf den Justiergewichtsangriffspunkten (36, 38) wenigstens ein Justiergewicht (30, 32) auflegt.

2. Wägezelle nach Anspruch 1, **dadurch gekennzeichnet, dass** die Wägezelle (10) ein Gehäuse (12) aufweist, aus dem sich der Lastkragarm (20) heraus erstreckt, und dass der Justiergewichtskragarm (28) im Gehäuse (12) der Wägezelle (10) untergebracht ist.

3. Wägezelle nach Anspruch 1 oder 2, **dadurch gekennzeichnet, dass** dasselbe Justiergewicht (30) auf mehreren Justiergewichtsangriffspunkten (36, 38) des Justiergewichtskragarms (28) aufgelegt werden kann oder an jedem Justiergewichtsangriffspunkt (36, 38) ein eigenes Justiergewicht (30, 32) vorgesehen ist und die Aktivierungseinheit (30) die Justiergewichte nacheinander auf den Justiergewichtskragarm (28) auflegt.

4. Wägezelle nach einem der vorhergehenden Ansprüche, **dadurch gekennzeichnet, dass** ein Justiergewichtsangriffspunkt (36) im Wesentlichen momentenfrei bezüglich des Wägesystems (14) ist und der andere Justiergewichtsangriffspunkt (38) vom Krafteinleitungspunkt (18) entfernt ist oder dass beide Justiergewichtsangriffspunkte (36, 38) vom Krafteinleitungspunkt (18) unterschiedlich entfernt sind.

5. Wägezelle nach einem der vorhergehenden Ansprüche, **dadurch gekennzeichnet, dass** zwei Justiergewichte (30, 32) gleicher Masse auflegbar sind.

6. Wägezelle nach einem der vorhergehenden Ansprüche, **dadurch gekennzeichnet, dass** der Lastkragarm (20) und der Justiergewichtskragarm (28) an derselben Stelle in das Wägesystem (14) angekoppelt sind, vorzugsweise indem sie ineinander übergehen und/oder dass der Justiergewichtskragarm (28) eine lineare, über den Krafteinleitungspunkt (18) hinausgehende Verlängerung des Lastkragarms (20) ist.

7. Wägezelle nach einem der vorhergehenden Ansprüche, **dadurch gekennzeichnet, dass** der Lastkragarm (20) und der Justiergewichtskragarm (28) innerhalb des Gehäuses (12) auf derselben Höhe und/oder vertikal versetzt verlaufen.

8. Wägezelle nach einem der vorhergehenden Ansprüche, **dadurch gekennzeichnet, dass** ein weiterer Justiergewichtskragarm (28) zur Auflage des Justiergewichts (30) vorgesehen ist, der sich quer zu der Längsrichtung (A) erstreckt.

9. Verfahren zum Justieren einer Wägezelle nach einem der vorhergehenden Ansprüche, **gekennzeichnet durch** folgende Schritte:
Auflegen wenigstens eines Justiergewichts (30, 32) auf zwei am Justiergewichtskragarm (28) vorgesehene Justiergewichtsangriffspunkte (36, 38),
Ermitteln der Gewichtswerte an beiden Justiergewichtsangriffspunkten (36, 38),
Berechnung der Änderung der Ecklast zwischen werkseitiger Justierung und Momentanzustand, und
Bestimmung des Kalibrierfaktors der Waage unter Berücksichtigung des Ecklastfehlers bzw. seiner Änderung.

10. Verfahren nach Anspruch 9, **dadurch gekennzeichnet, dass** aus der Abweichung der Differenz der beiden ermittelten Gewichtswerte zum kalibrierten Zustand die Änderung der Ecklast berechnet wird.

11. Verfahren nach Anspruch 9 oder 10, **dadurch gekennzeichnet, dass** werkseitig ein Grenzwert für die maximale Ecklast in der Wägezelle (10) abgelegt ist, wobei ab Erreichen des Grenzwerts der ermittelten Ecklast eine Fehlermeldung angezeigt wird.

## Claims

1. Weighing cell with a weighing system (14) with a point of force introduction (18), a load cantilever arm (20) for receiving the loads to be weighed at a position spaced from the point of force introduction (18) and an adjusting device, wherein the load cantilever arm (20) in plan view of the weighing cell (10) extends from the point of force introduction (18) in a longitudinal direction (A), **characterised by** an adjustment weight cantilever arm (28), which extends in the longitudinal direction (A) on the side opposite the load cantilever arm (20) with respect to the point of force introduction (18) and which has at least two adjustment weight points of action (36, 38) predetermined thereat, and at least one activating unit (34) which lays at least one adjustment weight (30, 32) on the adjustment weight points of action (36, 38).

2. Weighing cell according to claim 1, **characterised in that** the weighing cell (10) comprises a housing (12) from which the load cantilever arm (20) extends and that the adjustment weight cantilever arm (28) is accommodated in the housing (12) of the weighing cell (10).

3. Weighing cell according to claim 1 or 2, **characterised in that** the same adjustment weight (30) can be laid on a plurality of adjustment weight points of action (36, 38) of the adjustment weight cantilever arm, or an individual adjustment weight (30, 32) is provided at each adjustment weight point of action (36, 38) and the activating unit (30) lays the adjustment weights in succession on the adjustment weight cantilever arm (28).

4. Weighing cell according to any one of the preceding claims, **characterised in that** one adjustment weight point of action (36) is substantially free of moment with respect to the weighing system (14) and the other adjustment weight point of action (38) is spaced from the point of force introduction (18) or that the two adjustment weight points of action (36, 38) are differently spaced from the point of force introduction (18).

5. Weighing cell according to any one of the preceding claims, **characterised in that** two adjustment weights (30, 32) of the same mass can be laid.

6. Weighing cell according to any one of the preceding claims, **characterised in that** the load cantilever arm (20) and the adjustment weight cantilever arm (28) are coupled at the same point in the weighing system (14), preferably **in that** they go from one into the other and/or that the adjustment weight cantilever arm (28) is a linear prolongation, which goes out beyond the point of force introduction (18), of the load cantilever arm (20).

7. Weighing cell according to any one of the preceding claims, **characterised in that** the load cantilever arm (20) and the adjustment weight cantilever arm (28) extend within the housing (12) at the same height and/or with a vertical offset.

8. Weighing cell according to any one of the preceding claims, **characterised in that** a further adjustment weight cantilever arm (28) for supporting the adjustment weight (30) is provided and extends transversely to the longitudinal direction (A).

9. Method of adjustment a weighing cell according to any one of the preceding claims, **characterised by** the following steps:
laying at least one adjustment weight (30, 32) on two adjustment weight points of action (36, 38) provided at the adjustment weight cantilever arm (28),
determining the weight values at the two adjustment weight points of action (36, 38)
calculating the change in the corner load between factory setting and instantaneous state and
determining the calibration factor of the weighing machine with consideration of the corner load error or the change therein.

10. Method according to claim 9, **characterised in that** the change in the corner load is calculated from the departure of the difference of the two determined weight values from the calibrated state.

11. Method according to claim 9 or 10, **characterised in that** a limit value for the maximum corner load and the weighing cell (10) is filed at the factory, wherein an error report is indicated on reaching the limit value of the determined corner load.

## Revendications

1. Cellule de pesage comprenant un système de pesage (14) avec un point d'application de la force (18), un bras de charge en porte-à-faux (20), pour l'admission de charges à peser à une position éloignée du point d'application des charges (18), et un dispositif de réglage, le bras de charge en porte-à-faux (20), dans une vue plongeante sur la cellule de pesage (10), s'étendant à partir du point d'application de la force (18) dans une direction longitudinale (A), **caractérisée par** un bras d'ajustage du poids en porte-à-faux (28), qui s'étend dans la direction longitudinale (A) sur le côté opposé au bras de charge en porte-à-faux (20) par rapport au point d'application des forces (18), et qui présente au moins deux points d'engagement de poids d'ajustage (36, 38) prédéterminés sur celui-ci, et au moins une unité d'activation (34), qui applique au moins un poids d'ajustage (30, 32) sur les points d'engagements de poids d'ajustage (36, 38).

2. Cellule de pesage selon la revendication 1, **caractérisée en ce que** la cellule de pesage (10) présente un boîtier (12), à partir duquel le bras de charge en porte-à-faux (20) s'étend vers l'extérieur, et que le bras d'ajustage du poids en porte-à-faux (28) est logé dans le boîtier (12) de la cellule de pesage (10).

3. Cellule de pesage selon les revendications 1 ou 2, **caractérisée en ce que** le même poids d'ajustage (30) peut être appliqué en plusieurs points d'engagement de poids d'ajustage (36, 38) du bras d'ajustage du poids en porte-à-faux (28), ou un poids d'ajustage (30, 32) individuel est prévu sur chaque point d'engagement de poids d'ajustage (36, 38), et l'unité d'activation (30) applique les poids d'ajustage les uns après les autres sur le bras d'ajustage du poids en porte-à-faux (28).

4. Cellule de pesage selon l'une des revendications précédentes, **caractérisée en ce qu'**un point d'engagement de poids d'ajustage (36) est essentiellement désaccouplé vis-à-vis du système de pesage (14) et que l'autre point d'engagement de poids d'ajustement (38) est éloigné du point d'application de la force (18) ou que les deux points d'engagement de poids d'ajustage (36, 38) sont éloignés du point d'application de la force (18) de manière inégale.

5. Cellule de pesage selon l'une des revendications précédentes, **caractérisée en ce que** 2 deux poids d'ajustage (30, 32) de même masse peuvent être appliqués.

6. Cellule de pesage selon l'une des revendications précédentes, **caractérisée en ce que** le bras de charge en porte-à-faux (20) et le bras d'ajustage du poids en porte-à-faux (28) sont couplés au même endroit dans le système de pesage (14), de préférence, **en ce qu'**ils se confondent l'un avec l'autre et/ou que le bras de poids d'ajustage en porte-à-faux (28) constitue un prolongement linéaire du bras de charge en porte-à-faux (20) dépassant vers l'extérieur au-delà du point d'application de la force (18).

7. Cellule de pesage selon l'une des revendications précédentes, **caractérisée en ce que** le bras de charge en porte-à-faux (20) et le bras d'ajustage du poids en porte-à-faux (28) s'étendent au même niveau et/ou décalés verticalement à l'intérieur du boîtier (12).

8. Cellule de pesage selon l'une des revendications précédentes, **caractérisée en ce qu'**un autre bras d'ajustage du poids en porte-à-faux (28), qui s'étend perpendiculairement par rapport à la direction longitudinale (A), est prévu pour la mise en place du poids d'ajustage (30).

9. Procédé pour l'ajustage d'une cellule de pesage selon l'une des revendications précédentes, **caractérisé par** les étapes suivantes :
mise en place d'au moins un poids d'ajustage (30, 32) sur deux points d'engagement de poids d'ajustage (36, 38) prévus sur le bras d'ajustage du poids en porte-à-faux (28),
détermination des valeurs des poids aux deux points d'engagement de poids d'ajustage (36, 38),
calcul du facteur d'étalonnage de la balance en tenant compte de l'erreur de la charge d'équilibrage, respectivement, de sa variation.

10. Procédé selon la revendication 9, **caractérisé en ce que** la variation de la charge d'équilibrage est calculée à partir de la déviation de la différence entre les deux valeurs de poids déterminées pour l'état d'étalonnage.

11. Procédé selon les revendications 9 ou 10, **caractérisé en ce qu'**une valeur limite pour la charge d'équilibrage maximale dans la cellule de pesage (10) est consignée au niveau de l'usine, un signal d'erreur étant indiqué lorsque la valeur limite est atteinte par la charge d'équilibrage déterminée.
